# EUROPEAN PATENT APPLICATION

(11) **EP 4 539 068 A2**
(43) Date of publication of application: **16.04.2025**
(21) Application number: 24189164.7
(22) Date of filing: 17.07.2024
(51) Int. Cl.: H01G 4/232, H01G 4/30, H01G 4/12

(54) **MULTILAYER CERAMIC CAPACITOR WITH MULTILAYER EXTERNAL ELECTRODES BASED ON SILVER, COPPER AS THE MAIN COMPONENT AND DIFFERENT GLASSES**

(30) Priority: 11.10.2023 KR 20230134810
(71) Applicant: Samsung Electro-Mechanics Co., Ltd., Suwon-si, Gyeonggi-do 16674 (KR)
(72) Inventor: Yoo, Jong Hoon, Suwon-si, Gyeonggi-do (KR); Lee, Ji Hyun, Suwon-si, Gyeonggi-do (KR); Yoo, Dong Geon, Suwon-si, Gyeonggi-do (KR); Cho, Eun Hye, Suwon-si, Gyeonggi-do (KR)
(74) Representative: Grünecker Patent- und Rechtsanwälte PartG mbB

(57) **Abstract**

A multilayer ceramic capacitor (100) comprising:

a body (110) including a dielectric layer (111) and first and second internal electrodes (121, 122) alternately disposed with the dielectric layer (111) interposed therebetween, the body (110) having a first surface (1) and a second surface (2) opposing each other in a first direction (T), a third surface (3) and a fourth surface (4) opposing each other in a second direction (L) and connected to the first surface (1) and the second surface (2), and a fifth surface (5) and a sixth surface (6) opposing each other in a third direction (W) and connected to the first to fourth (1-4) surfaces;

a first external electrode (131) including:

a first lower electrode layer (131a) disposed on the third surface (3), the first lower electrode layer (131a) disposed between an extension line (E1) of the first surface (1) and an extension line (E2) of the second surface (2),

a first upper electrode layer (131b) disposed on the first lower electrode layer (131a), the first upper electrode layer (131b) disposed to extend onto a portion of the first surface (1) and the second surface (2), and

a first glass layer (131c) disposed between the first lower electrode layer (131a) and the first upper electrode layer (131b); and

a second external electrode (132) including:

a second lower electrode layer (132a) disposed on the fourth surface (4), the second lower electrode layer (132a) disposed between an extension line (E1) of the first surface (1) and an extension line (E2) of the second surface (2),

a second upper electrode layer (132b) disposed on the second lower electrode layer (132a), the second upper electrode layer (132b) disposed to extend onto a portion of the first surface (1) and the second surface (2), and

a second glass layer (132c) disposed between the second lower electrode layer (132a) and the second upper electrode layer (132b),

wherein each of the first and second lower electrode layers (131a, 132a) includes Ag (silver) and a first glass, and

each of the first and second upper electrode layers (131b, 132b) includes Cu (copper) and a second glass.

## Description

### CROSS-REFERENCE TO RELATED APPLICATION(S)

This application claims benefit of priority to Korean Patent Application No. 10-2023-0134810 filed on October 11, 2023 in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various types of electronic products such as imaging devices, including a liquid crystal display (LCD) and a plasma display panel (PDP), computers, smartphones, and mobile phones, and serves to charge or discharge electricity therein or therefrom. The multilayer ceramic capacitor may be used as a component of various electronic devices due to having a small size, ensuring high capacitance and being easily mounted.

A multilayer ceramic capacitor may basically include a body forming capacitance and an external electrode. Recently, a thickness of an external electrode of a multilayer ceramic capacitor has been decreasing in order to increase capacitance per unit volume of the multilayer ceramic capacitor.

However, as the thickness of the external electrode decreases, external moisture or a plating solution may easily permeate into a body, resulting in a reduction in reliability of the multilayer ceramic capacitor.

### SUMMARY

An aspect of the present disclosure is to improve reliability of a multilayer electronic component by preventing external moisture or a plating solution from permeating into a body.

However, the aspects of the present disclosure are not limited to those set forth herein, and will be more easily understood in the course of describing specific example embodiments of the present disclosure.

According to an aspect of the present disclosure, there is provided a multilayer electronic component including a body including a dielectric layer and first and second internal electrodes alternately disposed with the dielectric layer interposed therebetween, the body having a first surface and a second surface opposing each other in a first direction, a third surface and a fourth surface opposing each other in a second direction and connected to the first surface and the second surface, and a fifth surface and a sixth surface opposing each other in a third direction and connected to the first to fourth surfaces, a first external electrode including a first lower electrode layer disposed on the third surface, the first lower electrode layer disposed between an extension line of the first surface and an extension line of the second surface, a first upper electrode layer disposed on the first lower electrode layer, the first upper electrode layer disposed to extend onto a portion of the first surface and the second surface, and a first glass layer disposed between the first lower electrode layer and the first upper electrode layer, and a second external electrode including a second lower electrode layer disposed on the fourth surface, the second lower electrode layer disposed between an extension line of the first surface and an extension line of the second surface, a second upper electrode layer disposed on the second lower electrode layer, the second upper electrode layer disposed to extend onto a portion of the first surface and the second surface, and a second glass layer disposed between the second lower electrode layer and the second upper electrode layer. Each of the first and second lower electrode layers may include Ag and a first glass. Each of the first and second upper electrode layers may include Cu and a second glass.

According to another aspect of the present disclosure, there is provided a multilayer electronic component including a body including a dielectric layer and first and second internal electrodes alternately disposed with the dielectric layer interposed therebetween, the body having a first surface and a second surface opposing each other in a first direction, a third surface and a fourth surface opposing each other in a second direction and connected to the first surface and the second surface, and a fifth surface and a sixth surface opposing each other in a third direction and connected to the first to fourth surfaces, a first external electrode including a first lower electrode layer disposed on the third surface, the first lower electrode layer disposed between an extension line of the first surface and an extension line of the second surface, a first upper electrode layer disposed on the first lower electrode layer, the first upper electrode layer disposed to extend onto a portion of the first surface and the second surface, and a first glass layer disposed between the first lower electrode layer and the first upper electrode layer, and a second external electrode including a second lower electrode layer disposed on the fourth surface, the second lower electrode layer disposed between an extension line of the first surface and an extension line of the second surface, a second upper electrode layer disposed on the second lower electrode layer, the second upper electrode layer disposed to extend onto a portion of the first surface and the second surface, and a second glass layer disposed between the second lower electrode layer and the second upper electrode layer. Each of the first and second lower electrode layers may include Ag and a first glass. Each of the first and second upper electrode layers may include Cu and a second glass that includes Al.

According to example embodiments of the present disclosure, external moisture or a plating solution may be prevented from permeating into a body, thereby improving reliability of a multilayer electronic component.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a schematic perspective view of a multilayer electronic component according to an example embodiment of the present disclosure;
FIG. 2 is a schematic exploded perspective view of a body in FIG. 1;
FIG. 3 is a schematic cross-sectional view taken along line I-I' in FIG. 1;
FIG. 4 is a schematic cross-sectional view taken along line II-II' in FIG. 1; and
FIG. 5 is an enlarged view of region "K1" in FIG. 3.

### DETAILED DESCRIPTION

Hereinafter, example embodiments of the present disclosure are described with reference to the accompanying drawings. The present disclosure may, however, be exemplified in many different forms and should not be construed as being limited to the specific example embodiments set forth herein. In addition, example embodiments of the present disclosure may be provided for a more complete description of the present disclosure to those skilled in the art. Accordingly, the shapes and sizes of the elements in the drawings may be exaggerated for clarity of description, and elements denoted by the same reference numerals in the drawings may be the same elements.

In order to clearly illustrate the present disclosure, portions not related to the description are omitted, and sizes and thicknesses are magnified in order to clearly represent layers and regions, and similar portions having the same functions within the same scope are denoted by similar reference numerals throughout the specification. Throughout the specification, when an element is referred to as "comprising" or "including," it means that it may include other elements as well, rather than excluding other elements, unless specifically stated otherwise.

In the drawings, a first direction may be defined as a thickness (T) direction, a second direction may be defined as a length (L) direction, and a third direction may be defined as a width (W) direction.

### Multilayer Electronic Component

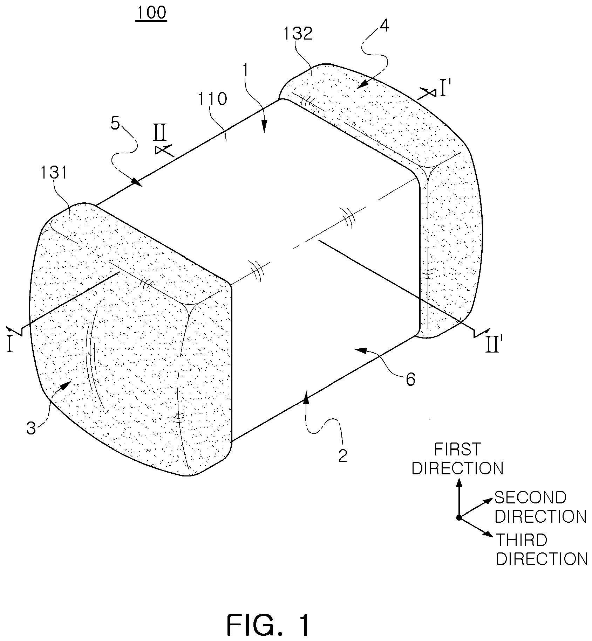

FIG. 1 is a schematic perspective view of a multilayer electronic component according to an example embodiment of the present disclosure.

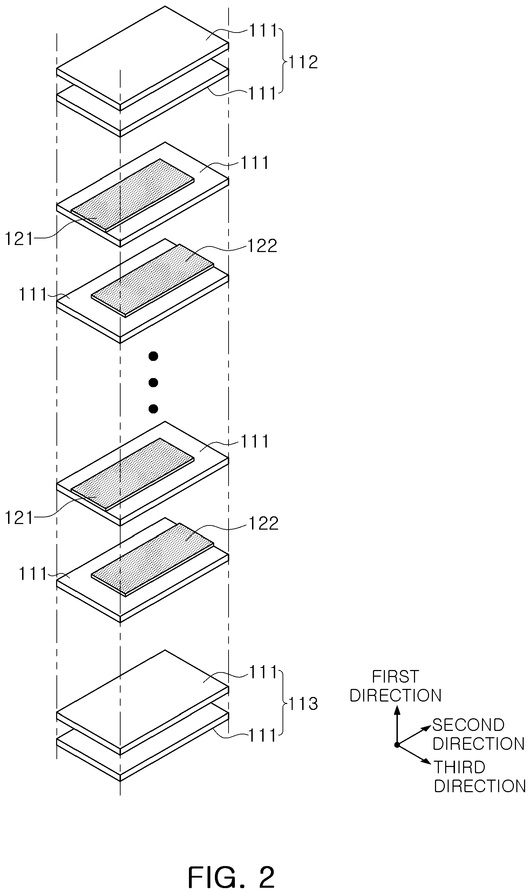

FIG. 2 is a schematic exploded perspective view of a body in FIG. 1.

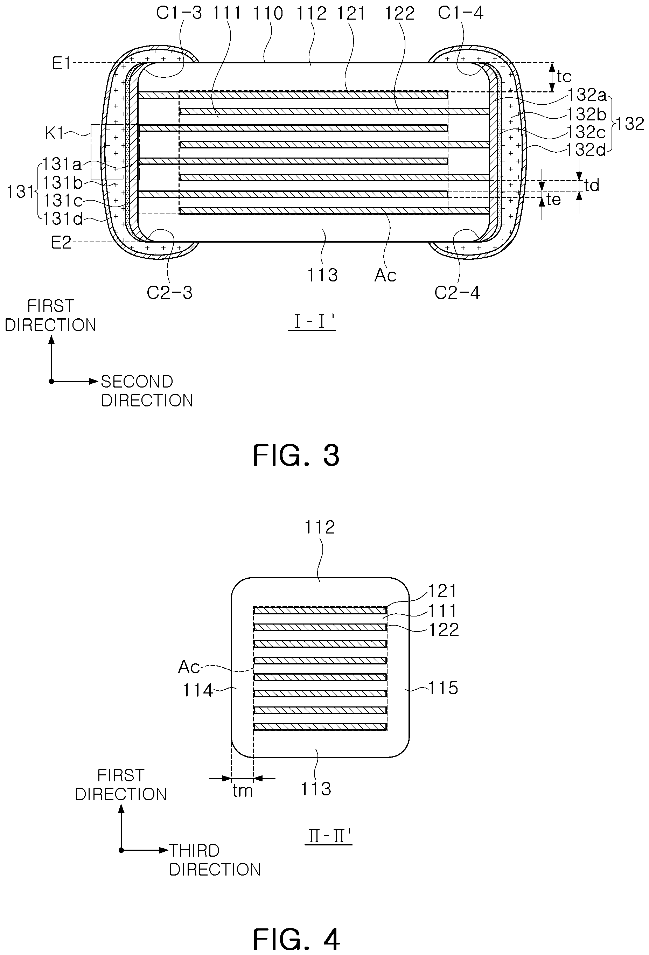

FIG. 3 is a schematic cross-sectional view taken along line I-I' in FIG. 1.

FIG. 4 is a schematic cross-sectional view taken along line II-II' in FIG. 1.

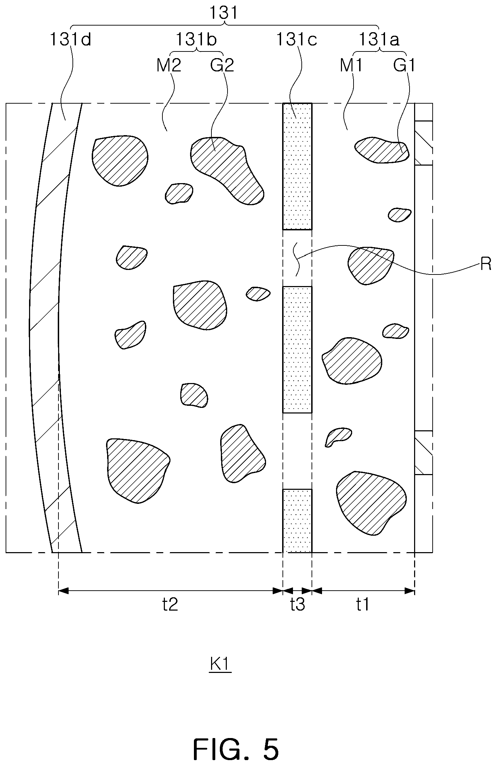

FIG. 5 is an enlarged view of region "K1" in FIG. 3.

Hereinafter, a multilayer electronic component 100 according to an example embodiment of the present disclosure will be described in detail with reference to FIGS. 1 to 5. In addition, a multilayer ceramic capacitor (hereinafter referred to as "MLCC") is described as an example of the multilayer electronic component, but the present disclosure is not limited thereto, and may be applied to various electronic products, such as inductors, piezoelectric elements, varistors, thermistors, or the like.

The multilayer electronic component 100 according to an example embodiment of the present disclosure may include a body 110 including a dielectric layer 111 and internal electrodes 121 and 122, and external electrodes 131 and 132.

A specific shape of the body 110 is not particularly limited. However, as illustrated, the body 110 may have a hexahedral shape or a shape similar thereto. During a sintering process, ceramic powder particles, included in the body 110, may shrink or an edge portion of the body 110 may be polished, such that the body 110 may not have a hexahedral shape having perfectly straight lines, but may have a substantially hexahedral shape.

The body 110 may have first and second surfaces 1 and 2 opposing each other in a first direction, third and fourth surfaces 3 and 4 connected to the first and second surfaces 1 and 2, the third and fourth surfaces 3 and 4 opposing each other in a second direction, and fifth and sixth surfaces 5 and 6 connected to the first to fourth surfaces 1, 2, 3, and 4, the fifth and sixth surfaces 5 and 6 opposing each other in a third direction.

The body 110 may have a first-third corner C1-3 connecting the first surface 1 and the third surface 3 to each other, a first-fourth corner C1-4 connecting the first surface 1 and the fourth surface 4 to each other, a second-third corner C2-3 connecting the second surface 2 and the third surface 3 to each other, and a second-fourth corner C2-4 connecting the second surface 2 and the fourth surface 4 to each other. In addition, the body 110 may have a first-fifth corner connecting the first surface 1 and the fifth surface 5 to each other, a first-sixth corner connecting the first surface 1 and the sixth surface 6 to each other, and a second-fifth corner connecting the second surface 2 and the fifth surface 5 to each other, and a second-sixth corner connecting the second surface 2 and the sixth surface 6 to each other. The corners may have a round shape by performing a process on edges connecting surfaces of the body 110 to each other to round the edges. The first to sixth surfaces 1, 2, 3, 4, 5, and 6 of the body 110 may be substantially flat surfaces, and a non-flat region of the body 110 may be viewed as a corner.

The body 110 may include a dielectric layer 111 and first and second internal electrodes 121 and 122 alternately disposed with the dielectric layer 111 interposed therebetween. A plurality of dielectric layers 111, included in the body 110, may be in a sintered state, and adjacent dielectric layers 111 may be integrated with each other such that boundaries therebetween are not readily apparent without using a scanning electron microscope (SEM).

A ceramic slurry including ceramic powder particles, an organic solvent, and a binder may be prepared, the slurry may be coated and dried on a carrier film to prepare a ceramic green sheet, and then the ceramic green sheet may be sintered to form the dielectric layer 111. The ceramic powder particles are not particularly limited as long as sufficient capacitance is obtainable therewith. For example, a barium titanate-based material, a lead composite perovskite-based material, or a strontium titanate-based material may be used for the ceramic powder particles. Examples of the ceramic powder particles may include (Ba₁₋ₓCaₓ)TiO₃ (0<x<1), Ba (Ti_{1-y}Ca_{y})O₃ (0<y<1), (Ba₁₋ₓCaₓ)(Ti_{1-y}Zr_{y})O₃ (0<x<1, 0<y<1), or Ba(Ti_{1-y}Zr_{y})O₃ (0<y<1) obtained by partially dissolving Ca or Zr in BaTiO₃.

For example, the internal electrodes 121 and 122 may be disposed alternately with the dielectric layer 111 in the first direction. The first internal electrode 121 may be spaced apart from the fourth surface 4, and may be connected to a first external electrode 131 on a side of the third surface 3. The second internal electrode 122 may be spaced apart from the third surface 3, and may be connected to a second external electrode 132 on a side of the fourth surface 4.

A conductive metal, included in the internal electrodes 121 and 122, may be one or more of Ni, Cu, Pd, Ag, Au, Pt, Sn, W, Ti, and alloys thereof, and may be more preferably Ni, but the present disclosure is not limited thereto.

The internal electrodes 121 and 122 may be formed by coating a conductive paste for an internal electrode, including a conductive metal, to a predetermined thickness on the ceramic green sheet and sintering the conductive paste. A printing method of the conductive paste for an internal electrode may be a screen-printing method, a gravure-printing method, or the like, but the present disclosure is not limited thereto.

An average thickness (td) of the dielectric layer 111, and an average thickness (te) of each of the internal electrodes 121 and 122 are particularly limited. The average thickness (td) of the dielectric layer 111 may be, for example, 0.1 um to 10 um. The average thickness (te) of each of the internal electrodes 121 and 122 may be, for example, 0.1 um to 3.0 um. In addition, the average thickness (td) of the dielectric layer 111 and the average thickness (te) of each of the internal electrodes 121 and 122 may be arbitrarily set depending on desired properties or usage. For example, in order to implement miniaturization and high capacitance, in the case of a high-voltage electronic component, the average thickness (td) of the dielectric layer 111 may be less than 2.8 um, and the average thickness (te) of each of the internal electrodes 121 and 122 may be less than 1 um. In addition, in order to implement miniaturization and high capacitance, in the case of a small IT electronic component, the average thickness (td) of the dielectric layer 111 may be 0.4 um or less, and the average thickness (te) of each of the internal electrodes 121 and 122 may be 0.4 um or less.

The average thickness (td) of the dielectric layer 111 and the average thickness (te) of each of the internal electrodes 121 and 122 may respectively refer to a size of the dielectric layer 111 in the first direction, and a size of each of the internal electrodes 121 and 122 in the first direction. The average thickness (td) of the dielectric layer 111 and the average size (te) of each of the internal electrodes 121 and 122 may be measured, for example, by scanning, with the SEM, a cross-section of the body 110 in the first and second directions at a magnification of 10,000. More specifically, the average thickness (td) of the dielectric layer 111 may be measured by measuring thicknesses of one dielectric layer 111 at multiple points of the dielectric layer 111, for example, thirty points equally spaced apart from each other in the second direction, and calculating an average value of the thicknesses. In addition, the average thickness (te) of each of the internal electrodes 121 and 122 may be measured by measuring thicknesses of each of the internal electrodes 121 and 122 at multiple points of each of the internal electrodes 121 and 122, for example, thirty points equally spaced apart from each other in the second direction, and calculating an average value of the thicknesses. The thirty points, equally spaced apart from each other, may be designated in the capacitance formation portion Ac. In addition, when such average value measurement is performed on ten dielectric layers 111 and ten internal electrodes 121 and 122, the average thickness (td) of the dielectric layer 111 and the average thickness (te) of each of the internal electrodes 121 and 122 may be further generalized.

The body 110 may include a capacitance formation portion Ac disposed within the body 110, the capacitance formation portion Ac including first and second internal electrodes 121 and 122 alternately disposed with the dielectric layer 111 interposed therebetween to form capacitance, and a first cover portion 112 and a second cover portion 113 respectively disposed on both surfaces of the capacitance formation portion Ac opposing each other in the first direction. The cover portions 112 and 113 may basically serve to prevent damage to an internal electrode caused by physical or chemical stress. The cover portions 112 and 113 may have a configuration the same as that of the dielectric layer 111, except that an internal electrode is not included.

An average thickness (tc) of each of the cover portions 112 and 113 is not particularly limited. That is, the average thickness (tc) of each of the cover portions 112 and 113 may be arbitrarily set depending on desired properties or usage. For example, in order to implement miniaturization and high capacitance of the multilayer electronic component, the average thickness (tc) of each of the cover portions 112 and 113 may be 300 um or less, 100 um or less, 30 um or less, or 20 um or less, but the present disclosure is not limited thereto. Here, the average thickness (tc) of each of the cover portions 112 and 113 may refer to an average thickness of each of the first cover portion 112 and the second cover portion 113.

The average thickness (tc) of each of the cover portions 112 and 113 may refer to an average size of each of the cover portions 112 and 113 in the first direction, and may be an average value of sizes of each of the cover portions 112 and 113 in the first direction, measured at five equally spaced points in the cross-section of the body 110 in the first and second directions.

The body 110 may include a first margin portion 114 and a second margin portion 115 respectively disposed on both surfaces of the capacitance formation portion Ac opposing each other in the third direction. That is, the margin portions 114 and 115 may refer to a region between both ends of the internal electrodes 121 and 122 and a boundary surface of the body 110 in a cross-section of the body 110 in the first and third directions.

The margin portions 114 and 115 may include a material the same as that of the dielectric layer 111, except that the internal electrodes 121 and 122 are not included. The margin portions 114 and 115 may basically serve to prevent damage to the internal electrodes 121 and 122 caused by physical or chemical stress.

The margin portions 114 and 115 may be formed by coating a ceramic green sheet with a conductive paste for an internal electrode, except for a portion of the ceramic green sheet on which a margin portion is to be formed. Alternatively, in order to suppress a step caused by the internal electrodes 121 and 122, the internal electrodes 121 and 122 may be stacked on each other and then cut to be exposed to the fifth and sixth surfaces 5 and 6 of the body, and then a single dielectric layer or two or more dielectric layers may be stacked on both surfaces of the capacitance formation portion Ac opposing each other in the third direction to form the margin portions 114 and 115.

An average thickness (tm) of each of the margin portions 114 and 115 is not particularly limited. The average thickness (tm) of each of the margin portions 114 and 115 may be arbitrarily set depending on desired properties or usage. For example, in order to implement miniaturization and high capacitance of the multilayer electronic component, the average thickness (tm) of each of the margin portions 114 and 115 may be 100 um or less, 20 um or less, or 15 um or less, but the present disclosure is not limited thereto. Here, the average thickness (tm) of each of the margin portions 114 and 115 may refer to an average thickness of each of the first margin portion 114 and the second margin portion 115.

The average thickness (tm) of each of the margin portions 114 and 115 may refer to an average size of each of the margin portions 114 and 115 in the third direction, and may be an average value of sizes of each of the margin portions 114 and 115 in the third direction, measured at five equally spaced points in the cross-section of the body 110 in the first and third directions.

The external electrodes 131 and 132 may be disposed on the third and fourth surfaces 3 and 4 of the body 110, and may extend onto a portion of the first, second, fifth and sixth surfaces 1, 2, 5, and 6 of the body 110. A region of the external electrodes 131 and 132 disposed on the third and fourth surfaces 3 and 4 may be defined as a connection portion, and a region of the external electrodes 131 and 132 disposed on the first, second, fifth, and sixth surfaces 1, 2, 5, and 6 may be defined as a band portion.

The external electrodes 131 and 132 may include a first external electrode 131 connected to the first internal electrode 121, and a second external electrode 132 connected to the second internal electrode 122. A region of the first external electrode 131 disposed on the third surface 3 may be defined as a first connection portion, and a region of the first external electrode 131 disposed on the first, second, fifth, and sixth surfaces 1, 2, 5, and 6 may be defined as a first band portion. A region of the second external electrode 132 disposed on the fourth surface 4 may be defined as a second connection portion, and a region of the second external electrode 132 disposed on the first, second, fifth, and sixth surfaces 1, 2, 5, and 6 may be defined as a second band portion.

The first external electrode 131 may include a first lower electrode layer 131a disposed on the third surface 3, the first lower electrode layer 131a disposed between an extension line E1 of the first surface 1 and an extension line E2 of the second surface 2, a first upper electrode layer 131b disposed on the first lower electrode layer 131a, the first upper electrode layer 131b extending onto a portion of the first and second surfaces 1 and 2, a first glass layer 131c disposed between the first lower electrode layer 131a and the first upper electrode layer 131b, and a first plating layer 131d disposed on the first upper electrode layer 131b.

The second external electrode 132 may include a second lower electrode layer 132a disposed on the fourth surface 4, the second lower electrode layer 132a disposed between an extension line E1 of the first surface 1 and an extension line E2 of the second surface 2, a second upper electrode layer 132b disposed on the second lower electrode layer 132a, the second upper electrode layer 132b extending onto a portion of the first and second surfaces 1 and 2, a second glass layer 132c disposed between the second lower electrode layer 132a and the second upper electrode layer 132b, and a second plating layer 132d disposed on the second upper electrode layer 132b.

The first lower electrode layer 131a may be basically in contact with the third surface 3, and may serve to connect the first internal electrode 121 and the first external electrode 131 to each other, and the second lower electrode layer 132a may be basically in contact with the fourth surface 4, and may serve to connect the second internal electrode 122 and the second external electrode 132 to each other.

Each of the first and second lower electrode layers 131a and 132a may include a first metal and a first glass. The first metal, included in the first and second lower electrode layers 131a and 132a, may include Ag. More specifically, the first metal may include Ag as a main element. Here, the first metal including Ag as a main element may mean that a ratio of the number of moles of Ag to the total number of moles of metal elements included in the first metal is 70% or more.

Ag may be a low melting point metal having low reactivity. The lower electrode layers 131a and 132a in contact with the third and fourth surfaces 3 and 4 of the body 110 may respectively include Ag, thereby preventing external moisture or a plating solution from permeating into the body 110.

The first lower electrode layer 131a may be disposed between the extension line E1 of the first surface 1 and the extension line E2 of the second surface 2, and the second lower electrode layer 132a may be disposed between the extension line E1 of the first surface 1 and the extension line E2 of the second surface E2, thereby reducing a size of the multilayer electronic component 100 in the first direction to improve capacitance per unit volume. Here, an extension line of each surface may refer to a line extending from a flat portion of each surface. That is, the first lower electrode layer 131a may not extend toward the first band portion, and the second lower electrode layer 132a may not extend toward the second band portion.

In an example embodiment, an end of the first lower electrode layer 131a may be disposed on a first-third corner C1-3 and a second-third corner C2-3, and an end of the second lower electrode layer 132a may be disposed on a first-fourth corner C1-4 and a second-fourth corner C2-4. External moisture and/or a plating solution may tend to permeate into the body 110 through the corners of the body 110 having a short distance to the internal electrodes 121 and 122. In this case, the ends of the first and second lower electrode layers 131a and 132a, including Ag having low reactivity, may be disposed on the corners of the body 110 to more effectively prevent external moisture or a plating solution from permeating into the body 110.

A method of forming the first and second lower electrode layers 131a and 132a is not particularly limited. However, the first and second lower electrode layers 131a and 132a may be formed, for example, by transferring a conductive sheet including first metal powder particles including Ag, a first glass, a binder, and an organic solvent onto the third and fourth surfaces 3 and 4, and then sintering the conductive sheet.

The first upper electrode layer 131b may be disposed on the first lower electrode layer 131a, and may be disposed to extend onto a portion of the first and second surfaces 1 and 2. The first upper electrode layer 131b may be disposed to extend on a portion of the fifth and sixth surfaces 5 and 6. The second upper electrode layer 132b may be disposed on the second lower electrode layer 132a, and may be disposed to extend onto a portion of the first and second surfaces 1 and 2. The second upper electrode layer 132b may be disposed to extend on a portion of the fifth and sixth surfaces 5 and 6. The first and second upper electrode layers 131b and 132b may basically extend toward the band portion to perform connection between the external electrodes 131 and 132 and a board on which the multilayer electronic component 100 is mounted.

Each of the first and second upper electrode layers 131b and 132b may include a second metal and a second glass. The second metal, included in the first and second upper electrode layers 131b and 132b, may include Cu. More specifically, the second metal may include Cu as a main element. Here, the second metal including Cu as a main element may mean that a ratio of the number of moles of Cu to the total number of moles of metal elements included in the second metal is 70% or more.

Cu may have excellent wettability for a metal plating layer. Accordingly, the first and second upper electrode layers 131b and 132b may include Cu, thereby improving the plating properties of plating layers 131d and 132d to be described below.

A method of forming the first and second upper electrode layers 131b and 132b is not particularly limited. However, the first and second upper electrode layers 131b and 132b may be formed, for example, by dipping the body 110 on which the first and second lower electrode layers 131a and 132a are formed in a conductive paste including second metal powder particles including Cu, a second glass, a binder, and an organic solvent, and then sintering the body 110.

The first glass layer 131c may be formed at an interface between the first lower electrode layer 131a and the first upper electrode layer 131b, and the second glass layer 132c may be formed at an interface between the second lower electrode layer 132a and the second upper electrode layer 132b. The glass layers 131c and 132c may serve to prevent external moisture or a plating solution from permeating into the body 110 at the interfaces between the lower electrode layers 131a and 132a and the upper electrode layers 131b and 132b.

The glass layers 131c and 132c may be formed only at the interfaces between the lower electrode layers 131a and 132a and the upper electrode layers 131b and 132b, and accordingly, the glass layers 131c and 132c may not be disposed to extend onto the first, second, fifth and sixth surfaces 1, 2, 5, and 6, but the present disclosure is not limited thereto.

The glass layers 131c and 132c may include elements the same as those of the first glass and/or the second glass. The glass layers 131c and 132c may include, for example, one or more of Ba, Zn, Al, Si, and B.

During a process of coating and sintering a conductive paste for forming the upper electrode layers 131b and 132b, the glass layers 131c and 132c may be moved to the interfaces between the lower electrode layers 131a and 132a and the upper electrode layers 131b and 132b, and formed.

The plating layers 131d and 132d may improve mounting properties. A type of each of the plating layers 131d and 132d is not particularly limited, and may be a plating layer including Ni, Sn, Pd, and/or an alloy including the same, and may be formed of a plurality of layers. Each of the plating layers 131d and 132d may be, for example, a Ni plating layer or a Sn plating layer, or may be a Ni plating layer and a Sn plating layer formed sequentially. In addition, each of the plating layers 131d and 132d may include a plurality of Ni plating layers and/or a plurality of Sn plating layers. A method of forming the plating layers 131d and 132d is not particularly limited, and an electrolytic plating method and/or an electroless plating method may be used.

Although the drawings illustrate a structure in which the multilayer electronic component 100 has two external electrodes 131 and 132, the present disclosure is not limited thereto, and the number or shapes of the external electrodes 131 and 132 may be changed depending on shapes of the internal electrodes 121 and 122 or other purposes.

Hereinafter, the first external electrode 131 of the multilayer electronic component 100 according to an example embodiment of the present disclosure will be described in more detail with reference to FIG. 5. However, the first external electrode 131 may be similar to the second external electrode 132 in terms of a configuration, but may be different from the second external electrode 132 in that the first external electrode 131 is connected to the first internal electrode 121, and the second external electrode 132 is connected to the second internal electrode 122. Thus, the following description of the first external electrode 131 may include a description of the second external electrode 132.

In an example embodiment, a first glass G1, included in the first lower electrode layer 131a, may include one or more of Ba, Zn, and Si, and a second glass G2, included in the first upper electrode layer 131b, may include one or more of Al and Si. The first glass G1 may be, for example, a borosilicate glass including one or more of BaO and ZnO, and the second glass G2 may be, for example, an aluminosilicate glass.

Ba and/or Zn, included in the first glass G1, may lower a softening temperature of the first glass G1 to sufficiently fill a void in the first lower electrode layer 131a. That is, the first glass G1 may improve sealing properties of the first lower electrode layer 131a covering the third surface 3 of the body 110 through which the first internal electrode 121 is exposed, thereby preventing permeation of external moisture or a plating solution.

It may be important to secure sealing properties of the first lower electrode layer 131a disposed further inwardly than the first upper electrode layer 131b. Accordingly, in an example embodiment, a sum of the number of moles of Ba and the number of moles of Zn relative to the total number of moles of elements other than oxygen, among elements included in the first glass G1, may be greater than a sum of the number of moles of Ba and the number of moles of Zn relative to the total number of moles of elements other than oxygen, among elements included in the second glass G2.

The first upper electrode layer 131b may be disposed to be in contact with the first plating layer 131d, such that the second glass G2, included in the first upper electrode layer 131b, may have more important corrosion resistance properties than the first glass G1 included in the first lower electrode layer 131a. The second glass G2 may include Al and/or Si having excellent corrosion resistance, thereby preventing erosion of the second glass G2 caused by a plating solution and resulting permeation of the plating solution.

It may be important to secure corrosion resistance properties of the first upper electrode layer 131b disposed further outwardly than the first lower electrode layer 131a. Accordingly, in an example embodiment, the number of moles of A1 relative to the total number of moles of elements other than oxygen, among elements included in the second glass G2, may be greater than the number of A1 relative to the total number of moles of elements other than oxygen, among elements included in the first glass G1.

The number of moles of each element of interest (e.g., Al, Ba, and Zn) and the total number of moles of elements (other than oxygen) included in the first glass G1, and the number of moles of each element of interest (e.g., Al, Ba, and Zn) and the total number of moles of elements (other than oxygen) included in the second glass G2 may be measured, for example, by scanning, with the SEM, a cross-section of the multilayer electronic component 100 in the first and second directions passing through the center of the body 110 in the third direction to obtain an image of the cross-section, and then performing energy dispersive spectroscopy (EDS) on a region of the image in which the first glass G1 is disposed and a region of the image in which the second glass G2 is disposed. Other methods and/or tools appreciated by one of ordinary skill in the art, even if not described in the present disclosure, may also be used.

In an example embodiment, the first glass layer 131c may have a discontinuous region R, and the first lower electrode layer 131a and the first upper electrode layer 131b may be in contact with each other R in at least a portion of the discontinuous region R. More specifically, in at least a portion of the discontinuous region R, the first metal M1 and the second metal M2 may be in contact with each other.

Accordingly, an alloy, including Ag and Cu, may be disposed in at least a portion of the discontinuous region R. The alloy may be formed by mutual reaction between the first metal M1 of the first lower electrode layer 131a and the second metal M2 of the first upper electrode layer 131b. The alloy formed by reaction of the first metal M1 and the second metal M2 may suppress permeation of external moisture.

In order to reduce a thickness of the first external electrode 131, the first lower electrode layer 131a may preferably have a reduced and constant thickness. In an example embodiment, in a cross-section of the multilayer electronic component 100 in the first and second directions, when a thickness of a central region of the first lower electrode layer 131a in the first direction is t1 and a thickness of a central region of the first upper electrode layer 131b in the first direction is t2, t1 and t2 may satisfy t1<t2. Here, a thickness of the first lower electrode layer 131a may refer to a size of the first lower electrode layer 131a in the second direction, and a thickness of the first upper electrode layer 131b may refer to a size of the first upper electrode layer 131b in the second direction.

A method of allowing the thickness of the first lower electrode layer 131a to be less than that of the first upper electrode layer 131b and to be constant is not particularly limited. However, the first lower electrode layer 131a may be formed by transferring a conductive sheet to the body 110 and then sintering the conductive sheet, and the first upper electrode layer 131b may be formed by dipping the body 110 in a conductive paste and then sintering the body 110, such that t1 < t2 may be satisfied.

t1 is not particularly limited, but may be 5 um or more and 7 pm or less. When t1 is less than 5 µm, the effect of improving moisture resistance reliability according to the present disclosure may be insignificant. When t1 is greater than 7 µm, it may be disadvantageous to reduce the thickness of the first external electrode 131.

A thickness of the first glass layer 131c is not particularly limited. However, in an example embodiment, a thickness t3 of a central region of the first glass layer 131c in the first direction may be 1 um or more and 3 um or less. When t3 is less than 1 um, the effect of improving moisture resistance reliability according to the present disclosure may be insignificant. In addition, when t3 is greater than 3 µm, the side effect of increasing an ESR of the multilayer electronic component 100 may occur.

For example, t1, t2, and t3 may be measured in an image obtained by scanning, with the SEM, the cross-section of the multilayer electronic component 100 in the first and second directions passing through the center of the body 110 in the third direction. Other methods and/or tools appreciated by one of ordinary skill in the art, even if not described in the present disclosure, may also be used.

While example embodiments have been illustrated and described above, it will be apparent to those skilled in the art that modifications and variations could be made without departing from the scope of the present disclosure as defined by the appended claims.

In addition, the term "an example embodiment" used herein does not refer to the same example embodiment, and is provided to emphasize a particular feature or characteristic different from that of another example embodiment. However, example embodiments provided herein are considered to be able to be implemented by being combined in whole or in part one with one another. For example, one element described in a particular example embodiment, even if it is not described in another example embodiment, may be understood as a description related to another example embodiment, unless an opposite or contradictory description is provided therein.

As used herein, the terms "first," "second," and the like may be used to distinguish a component from another component, and may not limit a sequence and/or an importance, or others, in relation to the components. In some cases, a first component may be referred to as a second component, and similarly, a second component may be referred to as a first component without departing from the scope of the example embodiments.

While example embodiments have been shown and described above, it will be apparent to those skilled in the art that modifications and variations could be made without departing from the scope of the present disclosure as defined by the appended claims.

## Claims

1. A multilayer electronic component comprising:
a body including a dielectric layer and first and second internal electrodes alternately disposed with the dielectric layer interposed therebetween, the body having a first surface and a second surface opposing each other in a first direction, a third surface and a fourth surface opposing each other in a second direction and connected to the first surface and the second surface , and a fifth surface and a sixth surface opposing each other in a third direction and connected to the first to fourth surfaces;
a first external electrode including:
a first lower electrode layer disposed on the third surface, the first lower electrode layer disposed between an extension line of the first surface and an extension line of the second surface,
a first upper electrode layer disposed on the first lower electrode layer, the first upper electrode layer disposed to extend onto a portion of the first surface and the second surface, and
a first glass layer disposed between the first lower electrode layer and the first upper electrode layer; and
a second external electrode including:
a second lower electrode layer disposed on the fourth surface, the second lower electrode layer disposed between an extension line of the first surface and an extension line of the second surface,
a second upper electrode layer disposed on the second lower electrode layer, the second upper electrode layer disposed to extend onto a portion of the first surface and the second surface, and
a second glass layer disposed between the second lower electrode layer and the second upper electrode layer,
wherein each of the first and second lower electrode layers includes Ag and a first glass, and
each of the first and second upper electrode layers includes Cu and a second glass.

2. The multilayer electronic component of claim 1, wherein
the first glass includes one or more of Ba, Zn, and Si, and
the second glass includes one or more of Al and Si.

3. The multilayer electronic component of claim 2, wherein the second glass includes Al, and a number of moles of Al relative to a total number of moles of elements other than oxygen included in the second glass is greater than the number of moles of Al, if present, relative to the total number of moles of elements other than oxygen included in the first glass.

4. The multilayer electronic component of claim 2, wherein the first glass includes Ba, Zn, or both, and a sum of a number of moles of Ba, if present, and a number of moles of Zn, if present, relative to a total number of moles of elements other than oxygen included in the first glass is greater than a sum of the number of moles of Ba, if present, and the number of moles of Zn, if present, relative to the total number of moles of elements other than oxygen included in the second glass.

5. The multilayer electronic component of claim 1, wherein
the first glass layer has a discontinuous region, and
the first lower electrode layer and the first upper electrode layer are in contact with each other in at least a portion of the discontinuous region.

6. The multilayer electronic component of claim 1, wherein
the first glass layer has a discontinuous region, and
the multilayer electronic component includes an alloy, which includes Ag and Cu, disposed in at least a portion of the discontinuous region.

7. The multilayer electronic component of claim 1, wherein
the body has a first-third corner connecting the first surface and the third surface to each other, a first-fourth corner connecting the first surface and the fourth surface to each other, a second-third corner connecting the second surface and the third surface to each other, and a second-fourth corner connecting the second surface and the fourth surface to each other, and
the first lower electrode layer has (i) a first end disposed on the first-third corner, and (ii) a second end disposed on the second-third corner, and the second lower electrode layer has (i) a third end disposed on the first-fourth corner, and (ii) a fourth end disposed on the second-fourth corner.

8. The multilayer electronic component of claim 1, wherein
in a cross-section of the multilayer electronic component in the first and second directions,
when a thickness of a central region of the first lower electrode layer in the first direction is t1 and a thickness of a central region of the first upper electrode layer in the first direction is t2, t1 and t2 satisfy t1<t2.

9. The multilayer electronic component of claim 8, wherein t1 is 5 um or more and 7 um or less.

10. The multilayer electronic component of claim 1, wherein
the first external electrode further includes a first plating layer disposed on the first upper electrode layer, and
the second external electrode further includes a second plating layer disposed on the second upper electrode layer.

11. A multilayer electronic component comprising:
a body including a dielectric layer and first and second internal electrodes alternately disposed with the dielectric layer interposed therebetween, the body having a first surface and a second surface opposing each other in a first direction, a third surface and a fourth surface opposing each other in a second direction and connected to the first surface and the second surface, and a fifth surface and a sixth surface opposing each other in a third direction and connected to the first to fourth surfaces;
a first external electrode including:
a first lower electrode layer disposed on the third surface, the first lower electrode layer disposed between an extension line of the first surface and an extension line of the second surface,
a first upper electrode layer disposed on the first lower electrode layer, the first upper electrode layer disposed to extend onto a portion of the first surface and the second surface, and
a first glass layer disposed between the first lower electrode layer and the first upper electrode layer; and
a second external electrode including:
a second lower electrode layer disposed on the fourth surface, the second lower electrode layer disposed between an extension line of the first surface and an extension line of the second surface,
a second upper electrode layer disposed on the second lower electrode layer, the second upper electrode layer disposed to extend onto a portion of the first surface and the second surface, and
a second glass layer disposed between the second lower electrode layer and the second upper electrode layer,
wherein each of the first and second lower electrode layers includes Ag and a first glass, and
each of the first and second upper electrode layers includes Cu and a second glass that includes Al.

12. The multilayer electronic component of claim 11, wherein a number of moles of Al relative to a total number of moles of elements other than oxygen included in the second glass is greater than the number of moles of Al, if present, relative to the total number of moles of elements other than oxygen included in the first glass.

13. The multilayer electronic component of claim 12, wherein the first glass includes one or more of Ba, Zn, and Si.

14. The multilayer electronic component of claim 13, wherein
in a cross-section of the multilayer electronic component in the first and second directions,
when a thickness of a central region of the first lower electrode layer in the first direction is t1 and a thickness of a central region of the first upper electrode layer in the first direction is t2, t1 and t2 satisfy t1<t2.

15. The multilayer electronic component of claim 14, wherein t1 is 5 um or more and 7 um or less.
